Europäisches Patentamt

European Patent Office

Office européen des brevets

(11) Veröffentlichungsnummer: **0 501 504 A1**

# EUROPÄISCHE PATENTANMELDUNG

(21) Anmeldenummer: **92103444.3**

(22) Anmeldetag: **28.02.92**

(51) Int. Cl.5: **A62D 3/00**, C06B 21/00,
B01D 53/34

(30) Priorität: **01.03.91 DE 4106615**

(43) Veröffentlichungstag der Anmeldung:
**02.09.92 Patentblatt 92/36**

(84) Benannte Vertragsstaaten:
**AT BE CH DE ES FR GB IT LI NL SE**

(71) Anmelder: **Buck Werke GmbH & Co
Geislinger Strasse 21
W-7347 Bad Überkingen(DE)**

(72) Erfinder: **Magenheimer, Hans E., Dr.
Vogesenstrasse
W-7847 Badenweiler(DE)**
Erfinder: **Hieke, Klaus, Dr.
Zähringer Strasse 34
W-7844 Neuenburg/Baden(DE)**
Erfinder: **Rohmann, Jörg
Neumann Strasse 1
W-7845 Büggingen(DE)**

(74) Vertreter: **Spott, Gottfried, Dr. et al
Spott Weinmiller & Partner
Sendlinger-Tor-Platz 11
W-8000 München 2(DE)**

(54) **Verfahren zur Aufarbeitung von chlorierte Kohlenwasserstoffe enthaltenden Nebelkörpern oder Nebelwirkmassen.**

(57) Zur Aufarbeitung von chlorierte Kohlenwasserstoffe enthaltenden Nebelkörpern und/oder Nebelwirkmassen brennt man die Nebelkörper oder die Nebelwirkmassen kontrolliert ab, erhitzt die Schlacke nach, wobei ein von chlorierten organischen Verbindungen im wesentlichen freies Gemisch aus Zinkoxid und/oder Aluminiumoxid entsteht, verbrennt das in den Stufen a) und b) jeweils entstehende Rauchgas auf Temperaturen oberhalb von 900°C unter reduzierten Bedingungen nach, wäscht aus dem Rauchgas die chlorierten organischen Verbindungen Zinkchlorid und Aluminiumoxid oder Aluminiumchlorid heraus, gibt der wäßrigen Waschflüssigkeit Aktivkohle zu, wobei sich die chlorierten organischen Verbindungen und Ruß an Aktivkohle absorbieren, trennt die Aktivkohle ab und wandelt den Aktivkohleschlamm in einer Hochtemperaturverbrennungsstufe bei einer Temperatur von mindestens 900°C zu Salzsäuregas und Kohlendioxid um, fällt die im Waschwasser noch enthaltenen Zink- und/oder Aluminiumsalze aus, entwässert den Fällschlamm und trocknet bei einer Temperatur oberhalb 200°C und wäscht die bei den Stufen e) und f) erhaltenen Rauchgase wiederum mit Wasser aus und unter zieht das Waschwasser den Reinigungsstufen e) und f).

EP 0 501 504 A1

Die Erfindung betrifft ein Verfahren zur Aufarbeitung von chlorierte Kohlenwasserstoffe enthaltenden Nebelkörpern oder Nebelwirkmassen.

Nebelwirkmassen zur Erzeugung von künstlichen Nebeln sind, in Anlehnung an die Bergermischung, aus einer Mischung von chlorierten Kohlenwasserstoffen, wie Hexachlorethan, Hexachlorbenzol oder Hexachlorcyclohexan, und Metallpulver, insbesondere Aluminium und Zink, in Form des reinen Metalls oder als Metalloxid, zusammengesetzt.

In einer pyrotechnischen Reaktion reagieren diese Komponenten zu Metallchlorid, Metalloxid, Kohlenstoff in Form von Ruß und Kohlenmonoxid. Das Metallchlorid reagiert weiter mit der Feuchtigkeit der Luft zu Metallhydroxid und Chlorwasserstoff. So bildet sich beispielsweise bei der Verwendung von Zinkoxid oder Zink/Zinkoxid Zinkhydroxid, bei der Verwendung von Aluminium Aluminiumhydroxid. Das Hydroxid lagert weiter aus der Feuchtigkeit der Luft Wasser an, welches dann als $Zn(OH)_2 \cdot nH_2O$ bzw. $Al(OH)_3 \cdot nH_2O$ als Nebelsubstanz wirkt. Wenn nun die Nebelwirkmassen oder die sie enthaltenden Nebelkörper nach Ende der Gewährleistungsdauer überlagert sind, führt dieser Gehalt an chlorierten Kohlenwasserstoffen zu Problemen bei der Beseitigung. Zur Entsorgung von chlorierte Kohlenwasserstoffe enthaltenden Nebelwirkmassen werden unterschiedliche Techniken diskutiert, die in zwei Gruppen unterteilt werden können, nämlich einerseits eine physikalisch/chemische Verringerung des Gefährdungspotentials und Abtrennung der Satzbestandteile und andererseits ein kontrolliertes Abbrennen der Körper.

Für die erste Gruppe kommen drei Varianten in Betracht, nämlich Hydrolyse, Sublimation oder Extraktion. Bei all diesen Varianten muß zunächst der Anzündsatz entfernt werden und anschließend die Nebelkörper mechanisch zerkleinert werden. Diese Verfahren haben ein hohes Sicherheitsrisiko, dessen Minimierung einen hohen technischen und finanziellen Aufwand erfordert.

Um die zerkleinerte Nebelwirkmasse durch Hydrolyse aufzuarbeiten, wird sie in Wasser aufgeschlämmt, wobei das in der Wirkmasse enthaltene Zink mit Wasser zu Zinkhydroxid und Wasserstoff reagiert. Die Reaktion ist schwer steuerbar und durch den sich bildenden Wasserstoff besteht Explosionsgefahr. Außerdem läuft die Hydrolysereaktion unter nicht unbeträchtlicher Wärmeentwicklung ab, was zur Selbstentzündung des Reaktionsgemisches führen kann. Der bei diesem Verfahren entstehende Schlamm, der entwässert werden kann, ist hochgradig mit chlorierten Kohlenwasserstoffen beladen und muß, da er für eine Weiterverwendung nicht geeignet ist, als Sondermüll entsorgt werden.

Auch die Aufarbeitung durch Sublimation weist Nachteile auf. Hier werden die chlorierten Kohlenwasserstoffe bei erhöhter Temperatur aus der gemahlenen Wirkmasse sublimiert. Das zurückbleibende Gemisch aus Metall und Metalloxid, z. B. Zinkoxid und Aluminium kann dann in der Metallherstellung eingesetzt werden. Da die Nebelsätze aufgrund ihrer Zusammensetzung an normaler Atmosphäre genauso wie im Vakuum oder unter Inertgasatmosphäre brennen und außerdem das Abbrandverhalten durch die Verschiebung der Nebelsatzzusammensetzung zu höheren Reduktionsmittelgehalten im Verlauf der Sublimation verändert wird, ist technisch ein sehr hoher Aufwand erforderlich, um ein sicheres Aufarbeiten zu gewährleisten. Die zurückbleibenden Metalle/Metalloxide bedürfen vor einer Weiterverwendung einer zusätzlichen Aufarbeitung.

Eine Extraktion der Wirkmassen ist ebenfalls mit Problemen behaftet. Hier werden nach mechanischer Zerkleinerung der Nebelkörper die chlorierten Kohlenwasserstoffe mit einem geeigneten Lösungsmittel ausgewaschen. Das Lösungsmittel kann anschließend durch Destillation zurückgewonnen und erneut in den Waschkreislauf eingeschleust werden. Nachteil dieses Verfahrens ist die Verwendung von Lösungsmitteln, die ein zusätzliches Gefährdungspotential hervorrufen, zu dessen Minimierung ein aufwendiger Lösungsmittelkreislauf erforderlich ist. Außerdem ist die Entsorgung der verbrauchten Lösungsmittel äußerst problematisch und teuer. Die Extraktion kann nicht vollständig durchgeführt werden; die zurückbleibenden Metalle/Metalloxide müssen wegen noch anhaftender halogenierter Kohlenwasserstoffe und Lösungsmittel vor einer Weiterverwendung nachgereinigt werden.

Alle diese Verfahren sind somit nicht zufriedenstellend.

In der zweiten Gruppe werden als andere Möglichkeit zur Entsorgung von chlorierte Kohlenwasserstoffe enthaltenden Nebelwirkmassen die Wirkmassen bzw. die sie enthaltenden Körper kontrolliert verbrannt. Dazu werden die Nebelkörper in einer feuerfest ausgemauerten Kammer abgebrannt, das entstehende Rauchgas wird nachverbrannt und in einem Wäscher durch Absorption mit Wasser gereinigt. Das im Waschwasser enthaltene Zinkchlorid kann ausgefällt werden. Der Fällschlamm wird entwässert und als Sondermüll entsorgt.

Alle diese Verfahren weisen gravierende Nachteile auf. Eine Wiederverwertung der wertvollen Inhaltsstoffe (Nebelkomponenten), wie Aluminium und Zink, ist nicht möglich. Darüber hinaus sind die anfallenden Schlacken mit chlorierten aliphatischen und aromatischen Kohlenwasserstoffen belastet.

Es war nun Aufgabe der vorliegenden Erfindung, ein Verfahren zur Aufarbeitung von Chlorkohlenwasserstoffe enthaltenden Nebelwirkmassen und Nebelkörpern bereitzustellen, das bei befriedigender Betriebssicherheit ohne hohes Gefährdungspotential durchgeführt werden kann, die Wiederverwertung der metallischen Inhaltsstoffe ermöglicht und keine mit chlorierten Kohlenstoffverbindungen belasteten Rückstände liefert.

Diese Aufgabe wird gelöst durch ein Verfahren zur Aufarbeitung von chlorierte Kohlenwasserstoffe enthaltenden Nebelwirkmassen oder Nebelkörpern, das dadurch gekennzeichnet ist, daß man

a) die Nebelkörper oder Nebelwirkmassen kontrolliert abbrennt,

b) die Schlacke nacherhitzt, wobei ein von chlorierten organischen Verbindungen im wesentlichen freies Gemisch aus Zinkoxid und/oder Aluminiumoxid entsteht,

c) das in den Stufen a) und b) jeweils entstehende Rauchgas auf Temperaturen oberhalb von 900°C unter reduzierenden Bedingungen nachverbrennt,

d) aus dem Rauchgas chlorierte organische Verbindungen, Zinkchlorid und Aluminiumoxid oder Aluminiumchlorid herauswäscht,

e) der wäßrigen Waschflüssigkeit Aktivkohle zugibt, wobei sich chlorierte organische Verbindungen und Ruß an Aktivkohle absorbieren, Aktivkohle abtrennt und den Aktivkohleschlamm in Hochtemperatur-Verbrennungsstufe bei einer Temperatur von mindestens 900°C zu Salzsäuregas und Kohlendioxid umwandelt,

f) anschließend die im Waschwasser enthaltenen Zink- und/oder Aluminiumsalze ausfällt, den Fällschlamm entwässert und bei einer Temperatur oberhalb 200°C trocknet und

g) die bei den Schritten e) und f) erhaltenen Rauchgase wiederum auswäscht und die wäßrige Waschflüssigkeit den Reinigungsstufen e) und f) unterzieht.

Mit dem erfindungsgemäßen Verfahren gelingt es, chlorierte Kohlenwasserstoffe enthaltende Nebelwirkmassen und Nebelkörper so aufzuarbeiten, daß als Rückstand nur Zink- und/oder Aluminiumoxide bzw. Hydroxide sowie gegebenenfalls Metallteile zurückbleiben, die einer Wiederverwertung zugeführt werden können. Die Aufarbeitung ist ohne Gefährdung des Betriebspersonals durchzuführen.

Nebelwirkmassen, bei denen sich in der nebelbildenden Reaktion Zinkchlorid oder Aluminiumchlorid bildet, sind üblicherweise aus den Komponenten chlorierte Kohlenwasserstoffe, wie Hexachlorethan, Hexachlorbenzol oder Hexachlorcyclohexan, Aluminium und/oder Zinkoxid bzw. Zink/Zinkoxid aufgebaut. Die Nebelwirkmasse ist in der Regel in einem Behältnis, das üblicherweise aus Stahl oder Aluminium besteht, entweder allein oder zusammen mit anderen Komponenten enthalten und mit einem Anzündsatz versehen.

Im folgenden soll unter dem Begriff Nebelkörper jede Art von mit einem Anzündsatz versehener nebelerzeugender Zusammensetzung verstanden werden. In Schritt a) des erfindungsgemäßen Verfahrens wird nun die Nebelwirkmasse oder der Nebelkörper kontrolliert abgebrannt. Unter kontrollierten Bedingungen ist dabei zu verstehen, daß alle entstehenden Stoffe, d. h. sowohl Schlacke als auch Rauchgas erfaßt und abgefangen werden und nicht in die Umgebung bzw. Atmosphäre gelangen. Bevorzugt wird dabei die Luftzufuhr so kontrolliert, daß die Verbrennung in reduzierender Atmosphäre abläuft. Bei Aufarbeitung ganzer Nebelkörper erfolgt die Verbrennung über die Zünder, wobei in einer bevorzugten Ausführungsform die Nebelkörper kontinuierlich in die Abbrandkammer geführt werden, wobei sich durch die in der Kammer befindlichen abbrennenden Körper die Anzündladungen der zugeführten Körper entzünden und damit die Verbrennung einleiten. Werden von Anzündladungen befreite Nebelwirkmassen abgebrannt, so muß zu Beginn extern eine Zündung erfolgen, wobei dann die abbrennende Masse die jeweils nachgeführte Masse wiederum zündet.

Wenn ganze Nebelkörper verbrannt werden, deren Umhüllung aus Stahl besteht, so wird nach der Verbrennung von Schritt a) das Eisen aus der Schlacke in an sich bekannter Weise abgetrennt, z. B. mit Magneten oder durch Sieben.

Bei der Verbrennung von Zink und Hexachlorethan enthaltenden Nebelwirkmassen laufen folgende Reaktionen ab:

Hauptreaktion:

$$2\ Al\ +\ C_2Cl_6\ +\ 3\ ZnO\ \rightarrow\ 3\ ZnCl_2\ +\ 2\ C\ +\ Al_2O_3$$

Nebenreaktion:

$$2\ Al\ +\ 3\ C_2Cl_6\ +\ 9\ ZnO\ \rightarrow\ Al_2O_3\ +\ 9\ ZnCl_2\ +\ 6\ CO$$

Aluminium und Zinkoxid reagieren mit den chlorierten Kohlenwasserstoffen, beispielsweise Hexachlorethan, wobei Zinkchlorid, Aluminiumoxid und freier Kohlenstoff in Form von Ruß entstehen.

In einer Nebenreaktion reagieren Aluminium und Zinkoxid mit chlorierten Kohlenwasserstoffen, z. B.

Hexachlorethan, zu Aluminiumoxid und Zinkchlorid, wobei außerdem Kohlenmonoxid entsteht.

Weiterhin kommt es zu Reaktionen und Umlagerungen der chlorierten Kohlenwasserstoffe, wobei aliphatische und aromatische chlorierte Kohlenwasserstoffe entstehen.

In einer Sekundärreaktion reagiert das Zinkchlorid mit Wasser zu Zinkhydroxid und HCl. Diese Sekundärreaktion wird für das Auswaschen des Zinkchlorids aus dem Rauchgas mit Wasser ausgenutzt:

$$3 \; ZnCl_2 \; + \; 6 \; H_2O \rightarrow 3 \; Zn(OH)_2 \; + \; 6 \; HCl$$

Über den Abbrandmechanismus von Nebelwirkmassen, die auf Basis von Hexachlorcyclohexan/Aluminium aufgebaut sind, ist nur wenig bekannt; folgender Reaktionsmechanismus wird angenommen:

$$4 \; Al \; + \; 2 \; C_6H_6Cl_6 \; + \; 15 \; O_2 \, (\text{als Sauerstoffträger}) \rightarrow 4 \; AlCl_3 \; + \; 12 \; CO_2 \; + \; 6 \; H_2O$$

Die kontrollierte Verbrennung der Nebelkörper wird in einer mit einer feuerfesten Auskleidung versehenen Abbrandkammer durchgeführt.

Bei dem Abbrand fällt Schlacke an, die Zinkoxid und/oder Aluminiumoxid und Kohlenstoff enthält. Um die in der Schlacke vorhandenen Zink- bzw. Aluminiumanteile einer Wiederverwertung zuzuführen, müssen die chlorierten organischen Verbindungen entfernt werden. Dies geschieht in Schritt b) durch eine thermische Aufbereitung der Schlacke. Dazu wird die Schlacke nacherhitzt, wobei ein von chlorierten organischen Verbindungen im wesentlichen freies Gemisch aus Zinkoxid und/oder Aluminiumoxid sowie wiederum ein Rauchgas, das chlorierte organische Verbindungen enthält, entsteht. Die von chlorierten organischen Verbindungen freie Mischung aus Zinkoxid und/oder Aluminiumoxid kann in der Aluminium- oder Zinkherstellung eingesetzt werden.

Für die Nacherhitzung der Schlacken sind Temperaturen von mehr als 200°C geeignet. Bei Temperaturen über 200°C verdampfen die chlorierten Kohlenwasserstoffe, so daß die zurückbleibenden Zink- und/oder Aluminiumoxide im wesentlichen von chlorierten Verbindungen frei sind. Die Dauer der Erhitzung hängt von der angewendeten Temperatur ab und ist um so kürzer, je höher die Temperatur ist. Aus wirtschaftlichen Überlegungen wird bevorzugt eine Temperatur im Bereich von 350 bis 450°C angewendet, ein hinsichtlich Verweildauer und Energiebedarf optimaler Bereich. In diesem Erhitzungsbereich erhält man ein Endprodukt, das weitgehend frei ist von Chlorkohlenwasserstoffen und Kohlenstoff in Form von Ruß.

Bei der kontrollierten Verbrennung in Schritt a) und bei der thermischen Nacherhitzung in Schritt b) entstehen, je nach behandeltem Wirkmassentyp, Rauchgase, die neben Zinkchlorid oder Aluminiumchlorid, Aluminiumoxid und Ruß erhebliche Anteile an chlorierten organischen Verbindungen enthalten, die für die weitere Aufarbeitung Probleme bereiten. Um den Gehalt an chlorierten Verbindungen zu eliminieren, wird daher das Rauchgas in Schritt c) auf Temperaturen von mehr als 900°C unter reduzierenden Bedingungen nachverbrannt, wobei die vorhandenen chlorierten Verbindungen und auch der Ruß in Salzsäuregas und Kohlendioxid umgewandelt wird. Bevorzugt erfolgt die Nachverbrennung bei Temperaturen im Bereich von 1000 bis 1500°C. Die Erhitzungsdauer hängt auch hier von der angewendeten Temperatur ab, die Gase sollten jedoch mindestens 2 Sekunden den hohen Temperaturen ausgesetzt werden.

Aus dem Rauchgas werden anschließend in Schritt d) mit Wasser die störenden Anteile ausgewaschen. Das dabei erhaltene Reingas ist praktisch frei von schädlichen Stoffen und kann daher in die Atmosphäre abgelassen werden. Da ca. 10% der beim Abbrand gebildeten Aerosolpartikel einen aerodynamischen Partikeldurchmesser von weniger als 1 μm aufweisen und deshalb schwierig abzutrennen sind, kann in einer bevorzugten Ausführungsform vor der Wäsche der Rauchgases eine Feinstaerosolabscheidung durchgeführt werden.

Das Waschwasser, das Zinkchlorid oder Aluminiumchlorid und Aluminiumhydroxid und Aluminiumoxid, Salzsäure, Spuren von Ruß und einen geringen Anteil chlorierte organische Verbindungen enthält, wird weiter aufgearbeitet. Bisher wurde bei solcherart belastetem sauren Betriebswasser eine Fällung durch Zusatz von Kalkmilch durchgeführt. Dabei fällt zwar ein Großteil der Zink- bzw. Aluminiumverbindungen aus, es bleibt jedoch noch Ruß und ein Teil der chlorierten Verbindungen zurück, so daß dieses Verfahren nicht befriedigend ist. Erfindungsgemäß wird daher zuerst in Schritt e) dem Betriebswasser Aktivkohle zugesetzt, wobei sich chlorierte Kohlenwasserstoffe und Ruß an Aktivkohle adsorbieren. Anschließend wird die Aktivkohle abgetrennt. Die Abtrennung kann nach an sich bekannten Verfahren erfolgen, beispielsweise in einer Filterpresse oder einer Zentrifuge. Die Abtrennung an sich ist nicht kritisch. Sie sollte so erfolgen, daß ein Rückstand mit möglichst geringem Wasseranteil und hohem Feststoffanteil erhalten wird. Der Aktivkohleschlamm kann anschließend verbrannt werden, wobei HCl und $CO_2$ entstehen.

Das nach Abtrennung der Aktivkohle zurückbleibende Waschwasser enthält noch Zink- und/oder Aluminiumverbindungen. Diese werden in Schritt f) durch Ausfällung mit einer Base in an sich bekannter Weise gewonnen. Die Ausfällung kann mit den üblichen Mitteln erfolgen. Allerdings wurde festgestellt, daß mit dem üblicherweise angewendeten Kalkmilchneutralisationsverfahren ein relativ hoher Restzinkgehalt im Abwasser von 3 g/m$^3$ erhalten bleibt. Zwei unterschiedliche Fällungsverfahren erwiesen sich als besonders vorteilhaft und sind daher bevorzugte Ausführungsformen. Das erste Verfahren besteht in einem Zusatz von Natronlauge, wobei soviel Natronlauge zugesetzt wird, bis ein pH-Wert im Bereich von 8 bis 9 erreicht ist. Dabei bildet sich Zinkhydroxid oder Aluminiumchlorid und Aluminiumoxide, das ausfällt und sich gut abfiltrieren läßt, Chloridionen bilden mit Natriumionen Kochsalz. Hier bleiben nicht mehr als maximal 1 g/m$^3$ Zink im Waschwasser zurück. Ein besonders vorteilhaftes Verfahren besteht darin, dem Waschwasser zuerst Ammoniak bis zu einem neutralen pH-Wert zuzugeben, wobei sich ein Zinkhydroxidammoniumkomplex bzw. Aluminiumhydroxid sowie Ammoniumchlorid bildet, und anschließend mit Phosphorsäure anzusäuern, so daß Zinkammoniumphosphat entsteht. Hier können Restzinkkonzentrationen bis hinunter zu 0,6 g/m$^3$ erreicht werden.

Das so behandelte Wasser ist praktisch frei von kontaminierenden Stoffen, d. h. frei von chlorierten Kohlenwasserstoffen und anderen chlorierten Verbindung, von Ruß, von Zink- und Aluminiumverbindungen, und kann daher entweder in das Abwasser geleitet oder im Kreislauf als Waschwasser zurückgeführt werden.

Der in Schritt f) durch die Fällung erhaltene Fällungsschlamm wird in an sich bekannter Weise entwässert. Geeignet sind hier Filtrier- und Zentrifugationsverfahren. Anschließend wird der Fällschlamm nacherhitzt, um etwa noch vorhandenen Ruß und aliphatische und aromatische chlorierte Verbindungen zu entfernen. Dazu wird der Schlamm auf Temperaturen von mehr als 200°C erhitzt, wobei ein Temperaturbereich von 250 bis 350°C bevorzugt ist. Der Schlamm wird solange erhitzt, bis der eventuell vorhandene Ruß verbrannt ist und die chlorierten organischen Verbindungen entfernt sind. Dies ist, abhängig von der angewendeten Temperatur, nach einem Zeitraum von 10 bis 50 Minuten der Fall. Das so erhaltene Pulver, das im wesentlichen aus Zinkoxid und/oder Aluminiumoxid besteht, kann als Rohstoff in der Zink- oder Aluminiumherstellung eingesetzt werden. Das bei der Nacherhitzung der Aktivkohle in Schritt e) und bei der Nacherhitzung des Fällschlamms in Schritt f) entstehende Rauchgas wird der Rauchgaswäsche von Schritt d) zugeführt und gemäß den Schritten e) und f) weiterbehandelt.

Mit dem erfindungsgemäßen Verfahren ist es möglich, Nebelwirkmassen und Nebelkörper so aufzuarbeiten, daß keine chlorierten Kohlenwasserstoffe sowie Metallchloride in die Umwelt gelangen, sondern zu ungefährlichen Verbindungen wie $CO_2$, NaCl, $Zn(OH)_2$, $Al_2O_3$ usw. abgebaut werden, daß die enthaltenen Metalle und Metalloxide einer Wiederverwertung zugeführt werden können und daß keine Sicherheitsrisiken auftreten.

Die Erfindung wird durch die folgenden Beispiele erläutert.

Beispiel 1

Es wurden Nebelsubkörper des Geschosses 155 mm, DM 105, Nebel, HC aufgearbeitet, die 2500 g Wirkmasse enthielten, bestehend aus:

ZnO: ca. 46 Gewichtsprozent,

$C_2Cl_6$: ca 46 Gewichtsprozent,

Al: ca. 8 Gewichtsprozent.

Die Abbranddauer eines solchen Nebelsubkörpers liegt bei ca. 180 Sekunden. Die Nebelkörper wurden in einer Abbrandkammer abgebrannt, deren beanspruchte Teile mit feuerfesten Chromkorundsteinen und deren nicht mechanisch beanspruchte Teile mit feuerfesten Andalusitsteinen ausgemauert waren. Das entstehende Rauchgas wurde kontinuierlich abgesaugt und der Abgasreinigungsstufe zugeführt. Die ausgebrannten Nebelkörper wurden zerkleinert, Metallteile anschließend magnetisch abgetrennt und die Schlacken in der thermischen Aufbereitung weiterverarbeitet.

Die im Rauchgas enthaltenen chlorierten organischen Verbindungen und der Ruß sind durch Rauchgaswäsche nur bedingt auswaschbar. Das Rauchgas wurde deshalb einer thermischen Nachverbrennung bei 1200°C unter reduzierenden Bedingungen unterzogen, wobei chlorierte organische Verbindungen und Ruß in Chlorwasserstoff und Kohlendioxid umgewandelt wurden. Das Rauchgas wurde der Wäscheranlage zugeführt. Eine Untersuchung zeigte, daß 10% der beim Abbrand der Nebelwirkmassen gebildeten Aerosolpartikel einen Partikeldurchmesser von < 1 μm aufweisen, so daß die Wäscheranlage mit einer entsprechenden Einrichtung zur Feinstaerosolabscheidung ausgerüstet wurde. Zur Abscheidung chlorierter aliphatischer und aromatischer Kohlenwasserstoffe wurden dem Betriebswasser pro Liter 5 g Aktivkohlepulver zugesetzt. Nach 30 Minuten wurde die Aktivkohle abfiltriert und der Gehalt an chlorierten Verbindungen im Wasser bestimmt. Es konnten praktisch keine chlorierten Verbindungen mehr nachgewiesen werden.

Zur Ausfällung der Zink- und Aluminiumsalze wurde im Betriebswasser solange konzentrierte Natronlauge unter Rühren zudosiert, bis ein pH-Wert von 8,5 erreicht war. Anschließend wurde ca. 30 Minuten weitergerührt. Dabei fiel der pH-Wert auf 8,1 ab, so daß erneut Natronlauge zudosiert werden mußte. Nach Abfiltrieren des Niederschlags wurden im Filtrat 1 g/m$^3$ Zink gefunden. Das Zink war als Zn(OH)$_2$, das Aluminium als Al$_2$O$_3$ mit geringen Anteilen Al(OH)$_3$ ausgefällt worden. Der Niederschlag wurde abfiltriert und konnte zur Zinkherstellung als Rohstoff verwendet werden. Die bei den einzelnen Verfahrensschritten angefallenen Schlacken und Filterschlämme wurden einer Nacherhitzung zugeführt. Die Nacherhitzung erfolgte in einem Drehrohrofen. Das Drehrohr dieses Ofens hatte eine Länge von 900 mm und einen Durchmesser von 400 mm. Die maximale Chargengröße betrug 25 l. Der Ofen wurde mit einer Drehzahl von 30 Umdrehungen pro Minute und einer Belüftungsrate von ca. 50 m$^3$ pro Stunde betrieben. Die Schlacke bzw. der Filterschlamm wurde mit einer Schaufel in das sich drehende, auf Versuchstemperatur vorgeheizte Drehrohr eingefüllt. Es wurden jeweils zwischen 9 und 14 kg Material eingesetzt, die Beschickung dauerte zwischen 3 und 5 Minuten.

Die Zusammensetzung des thermisch aufbereiteten Filterschlamms bzw. der thermisch aufbereiteten Schlacke ist den folgenden Tabellen 1 und 2 zu entnehmen:

Tabelle 1

| Zusammensetzung thermisch aufbereiteter Filterpreßschlamm | | | |
|---|---|---|---|
| Endtemperatur | Aufbereitung 400° C | Verweilzeit 30 min | |
| Zink [%] | 33,5 | Hexachlorethan [mg/kg] | n.n. |
| Aluminium [%] | 6,4 | Hexachlorbutadien [mg/kg] | n.n. |
| Calcium [%] | 6,7 | HCB [mg/kg] | ~0,1 |
| Chlorid [%] | 23,0 | PCB 209 [mg/kg] | n.n. |
| Ruß [%] | - | Unind [R 41,5 min] | n.b. |

Tabelle 2

| Zusammensetzung thermisch aufbereiteter Verbrennungsrückstände | | | |
|---|---|---|---|
| Zink [%] | 35,6 | Hexachlorethan [mg/kg] | n.n. |
| Aluminium [%] | 18,4 | Hexachlorbutadien [mg/kg] | n.n. |
| Calcium [%] | - | HCB [mg/kg] | 0,093 |
| Chlorid [%] | 6,0 | PCB 209 [mg/kg] | n.n. |
| | | PCB 52 [mg/kg] | 0,237 |

In den Tabellen 1 und 2 bedeuten:
HCB: Hexachlorbenzol
PCB: Polychloriertes Biphenyl (PCB 209 = Decachlorbiphenyl C$_{12}$Cl$_{10}$)
Unind: undefinierter Stoff (R 41,5 min ist die Rezensinszeit im PCB-Programm)

Den Resultaten ist zu entnehmen, daß weder Filterpreßschlamm noch Schlacke wesentliche Mengen an chlorierten Verbindungen enthalten. Die thermisch aufbereiteten Rückstände können daher ohne Bedenken der Zinkherstellung zugeführt werden.

Beispiel 2

Es wurden Nebelkörper aufgearbeitet in einem geschlossenen Drehrohrofen mit folgenden Auslegungsdaten:
Durchsatz Nebelkörper: 120 pro Stunde,
Taktung: 1 Nebelkörper alle 30 Sekunden,
Verweilzeit im Drehrohr: 180 Sekunden,
$V_{Luft}$ im Drehrohr: ca. 0,2 bis 0,5 m pro Sekunde,
Luftbedarf: 100 bis 1200 Nm$^3$ pro Stunde,
Drehrohrdurchmesser: ca. 1300 mm,
Drehrohrlänge: ca. 7500 mm,

Drehzahl: ca. 10 bis 12 Minuten.

Pro kg Nebelsatz entstanden bei der Verbrennung 0,75 kg $ZnCl_2$, 0.18 kg $Al_2O_3$, 0.04 kg Ruß, 0.02 kg chlorierte Kohlenwasserstoffe und Hexachlorethan sowie 0,01 kg Chlorgas.

Die thermische Nachverbrennung der Abgase erfolgte in einer Turbulatoranlage bei 1200°C bei einer Verweilzeit in der Anlage von ca. 5 Sekunden.

Die Abluft wurde danach in eine vierstufige Wäschereinheit geleitet, die aus Venturiwäscher, Strahlwäscher sowie einer zweistufigen Füllkörperkolonneneinheit bestand. Venturiwäscher und Strahlwäscher dienten als Vorabscheider. Der Venturiwäscher diente zur Abscheidung des Feinaerosolanteils im Abgas, wobei der durch ihn verursachte Druckverlust durch den Schubgewinn des Strahlwäschers kompensiert wurde. Die zweistufige Füllkörperkolonneneinheit dient als Feinwäscher.

Das Betriebswasser der Abluftreinigungsanlage wurde dann regeneriert. Zuerst wurden die im Wasser enthaltenen Restgehalte an organischen Substanzen durch Behandlung mit Aktivkohle entfernt. Dazu wurde dem Wasser ca. 0,5% Aktivkohlepulver in einem Mischer zudosiert. Die Kontaktzeit betrug ca. 15 Minuten. Anschließend wurde die Aktivkohle über ein rückspülbares Filter entfernt. Der mit chlororganischen Verbindungen beladene Aktivkohleschlamm wurde dann bei 1200°C zu $CO_2$ und HCl verbrannt. Anschließend wurde aus dem Wasser Zink als Zinkammoniumphosphat durch Zugabe von Ammoniak und Phosphorsäure ausgefällt. Dazu wurde die Waschflüssigkeit mit Ammoniumhydroxidlösung unter Rühren neutralisiert, dabei fiel ein Zinkhydroxidkomplex aus. Anschließend wurde mit konzentrierter Phosphorsäure auf einen pH von 3,5 angesäuert. Nachdem ein konstanter pH-Wert erreicht war, was nach 45 Minuten der Fall war, wurde mit Natronlauge ein pH-Wert von 8,5 eingestellt und der Niederschlag abfiltriert. Im Filtrat wurde eine Restzinkkonzentration von 0,6 $g/m^3$ gefunden.

Die thermische Aufbereitung der Verbrennungsschlacken und Filterpreßschlämme erfolgte in einem zweiten indirekt beheizten Drehrohrofen, der automatisch beschickt und entleert wurde. Es wurde auf eine Temperatur von 400°C erhitzt, um Wasser und halogenierte organische Verbindungen aus den entsprechenden Einsatzstoffen zu entfernen. Verbrennungsschlacken und Filterpreßückstände wurden gemeinsam behandelt, was ein einheitliches homogenes Endprodukt ergab. Das bei der Nacherhitzung im Drehrohrofen entstehende Abgas wurde wiederum einer thermischen Nachverbrennung bei 900 bis 1200°C unterzogen und dann das Rauchgas in den Reinigungszyklus zurückgeführt.

**Patentansprüche**

1. Verfahren zur Aufarbeitung von chlorierte Kohlenwasserstoffe enthaltenden Nebelkörpern und/oder Nebelwirkmassen, **dadurch gekennzeichnet**, daß man
   a) die Nebelkörper oder Nebelwirkmassen kontrolliert abbrennt,
   b) die Schlacke nacherhitzt, wobei ein von chlorierten organischen Verbindungen im wesentlichen freies Gemisch aus Zinkoxid und/oder Aluminiumoxid entsteht,
   c) das in den Stufen a) und b) jeweils entstehende Rauchgas auf Temperaturen oberhalb von 900°C unter reduzierenden Bedingungen nachverbrennt,
   d) aus dem Rauchgas die chlorierten organischen Verbindungen, Zinkchlorid und Aluminiumoxid oder Aluminiumchlorid mit Wasser herauswäscht,
   e) der wäßrigen Waschflüssigkeit Aktivkohle zugibt, wobei sich die chlorierten organischen Verbindungen und Ruß an Aktivkohle absorbieren, Aktivkohle abtrennt und den Aktivkohleschlamm in einer Hochtemperatur-Verbrennungsstufe bei einer Temperatur von mindestens 900°C zu Salzsäuregas und Kohlendioxid umwandelt,
   f) die im Waschwasser noch enthaltenen Zink- und/oder Aluminiumsalze ausfällt, den Fällschlamm entwässert und bei einer Temperatur oberhalb 200°C trocknet und
   g) die bei den Stufen e) und f) erhaltenen Rauchgase wiederum mit Wasser auswäscht und das Waschwasser den Reinigungsstufen e) und f) unterzieht.

2. Verfahren nach Anspruch 1, dadurch gekennzeichnet, daß man komplette Nebelkörper aufarbeitet und nach dem kontrollierten Abbrennen Metallteile abtrennt.

3. Verfahren nach Anspruch 1 oder 2, dadurch gekennzeichnet, daß man in Stufe b) die Schlacke auf eine Temperatur von mehr als 400°C erhitzt.

4. Verfahren nach einem der vorhergehenden Ansprüche, dadurch gekennzeichnet, daß man in Stufe c) das Rauchgas auf Temperaturen im Bereich von 1000 bis 1500°C erhitzt.

**5.** Verfahren nach einem der vorhergehenden Ansprüche, dadurch gekennzeichnet, daß man in Stufe e) die Aktivkohle mit einer Filterpresse oder einer Zentrifuge abtrennt.

**6.** Verfahren nach einem der vorhergehenden Ansprüche, dadurch gekennzeichnet, daß man in Stufe e) den Aktivkohleschlamm bei einer Temperatur von 1000 bis 1500 °C verbrennt.

**7.** Verfahren nach einem der vorhergehenden Ansprüche, dadurch gekennzeichnet, daß man zur Ausfällung von Zinkhydroxid und Aluminiumoxid/Aluminiumhydroxid Natronlauge verwendet.

**8.** Verfahren nach Anspruch 7, dadurch gekennzeichnet, daß man das in Stufe f) erhaltene Waschwasser mit Natronlauge versetzt, bis ein pH-Wert im Bereich von 8 bis 9 erreicht ist.

**9.** Verfahren nach einem der Ansprüche 1 bis 6, dadurch gekennzeichnet, daß man zur Ausfällung von Zinkhydroxid, Aluminiumoxid/Aluminiumhydroxid Ammoniak und Phosphorsäure verwendet.

Europäisches Patentamt

**EUROPÄISCHER RECHERCHENBERICHT**

Nummer der Anmeldung

EP    92 10 3444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 163 682 (F.E.MONTGOMERY ET AL)<br>* das ganze Dokument *<br>--- | 1,2 | A62D3/00<br>C06B21/00<br>B01D53/34 |
| A | DE-A-3 524 902 (ED. ZÜBLIN AG)<br>* das ganze Dokument *<br>--- | 1 | |
| A | EP-A-0 349 865 (JOSEF MEISSNER GMBH & CO)<br>* das ganze Dokument *<br>--- | 1 | |
| A | FR-A-1 199 969 (G-L-H-J. LOUIS)<br><br>----- | | |

**RECHERCHIERTE SACHGEBIETE (Int. Cl.5 )**

A62D
C06B
B01D
F23G

Der vorliegende Recherchenbericht wurde für alle Patentansprüche erstellt

| Recherchenort | Abschlußdatum der Recherche | Prüfer |
|---|---|---|
| DEN HAAG | 04 JUNI 1992 | FLETCHER A.S. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................
& : Mitglied der gleichen Patentfamilie, übereinstimmendes
    Dokument

EPO FORM 1503 03.82 (P0403)